# EUROPEAN PATENT APPLICATION

(11) **EP 2 677 580 A1**
(43) Date of publication of application: **25.12.2013**
(21) Application number: 12747496.3
(22) Date of filing: 14.02.2012
(51) Int. Cl.: H01M 8/02, H01M 8/10

(54) **FUEL CELL SEPARATOR**

(30) Priority: 14.02.2011 JP 2011028423; 20.01.2012 JP 2012009653
(71) Applicant: Kabushiki Kaisha Kobe Seiko Sho (Kobe Steel, Ltd.), Kobe-shi, Hyogo 651-8585 (JP)
(72) Inventor: TAKADA Satoru, Hyogo 651-2271 (JP); SUZUKI, Jun, Hyogo 651-2271 (JP); SATO, Toshiki, Hyogo 651-2271 (JP)
(74) Representative: Müller-Boré & Partner Patentanwälte
(86) International application number: PCT/JP2012/053409
(87) International publication number: WO 2012/111671

(57) **Abstract**

Provided is a fuel cell separator that can maintain a low contact resistance for a long period of time while being used for a fuel cell, by using a carbon film that can be formed with high productivity. The fuel cell separator 10 is provided with: a substrate 1 comprising titanium or titanium alloy; and a conductive carbon layer 2 that is formed by compression bonding carbon powder onto the substrate 1, and covers the surface thereof. Between the substrate 1 and the carbon layer 2, particle-like titanium carbide 31 and carbon dissolved titanium 32 generated by reacting the titanium of the substrate 1 and carbon of the carbon layer 2 with each other through heat treatment are connected, forming an intermediate layer 3.

## Description

### Technical Field

The present invention relates to fuel cell separators for use in fuel cells, each fuel cell including titanium as a substrate material.

### Background Art

Fuel cells can continuously generate electric power through continuous supply of fuel such as hydrogen and an oxidizing agent such as oxygen thereto. Unlike primary batteries such as dry batteries and secondary batteries such as lead storage batteries, the fuel cells each generate electric power at high generation efficiency without being significantly affected by the scale of a relevant system. In addition, the fuel cells are less noisy and less vibratile. The fuel cells are therefore promising as energy sources covering a variety of applications and scales. Specifically, the fuel cells have been developed in forms of polymer electrolyte fuel cells (PEFCs), alkaline fuel cells (AFCs), phosphoric acid fuel cells (PAFCs), molten carbonate fuel cells (MCFCs), solid oxide fuel cells (SOFCs), and biofuel cells. In particular, the polymer electrolyte fuel cells have been developed for use in fuel cell vehicles, domestic use cogeneration systems, and mobile devices such as mobile phones and personal computers.

Such a polymer electrolyte fuel cell (hereinafter, simply referred to as fuel cell) is configured of a plurality of unit cells, each unit cell including an anode, a cathode, and a polymer electrolyte membrane interposed between the anode and the cathode, where the unit cells are laminated together with separators (also referred to as bipolar plates) therebetween. The separators have grooves as flow channels for gas, for example, hydrogen or oxygen.

The separator also functions as a component that leads a generated current from the fuel cell to the outside. A material having a low contact resistance is therefore used for the separator, where the contact resistance refers to a voltage drop due to an interfacial phenomenon between the electrode and the separator surface. In addition, since the inside of the fuel cell has an acidic atmosphere of pH about 2 to 4, the separator is required to have high corrosion resistance. The separator is also required to have certain durability to maintain the above-described low contact resistance over a long duration during use in such acidic atmosphere. Thus, there have been used carbon separators that are milled from graphite powder compacts, or molded from a mixture of graphite and resin. The fuel cells are recently reduced in thickness and/or weight, or have a larger number of cells for higher output. The separators are accordingly required to be reduced in thickness. The carbon separators, however, are weak in strength and in toughness, and are therefore less likely to be reduced in thickness. Hence, investigations have been made on separators made of metal materials having excellent workability and high strength, such as aluminum, titanium, nickel, alloys based on such metals, and stainless steel.

When a metal material such as aluminum or stainless steel is used for the separator, such a material is corroded due to the inside acidic atmosphere of the fuel cell. This results in elution of metal ions, leading to early degradation of a polymer electrolyte membrane and a catalyst. When a metal having high corrosion resistance, such as titanium, is used, a passive film is formed under corrosive environment. Since the passive film has low conductivity, contact resistance becomes worse (increases). Thus, in a previously developed separator, a metal material is used as a substrate material, and a coating having certain conductivity that can be maintained over a long duration is provided over the surface of the substrate to add high corrosion resistance and high conductivity to the substrate.

Materials for the coating having high corrosion resistance and high conductivity include noble metals such as Au and Pt or alloys of such noble metals, which however lead to high cost. Thus, in a previously disclosed technology of a separator, a coating containing carbon is used as an inexpensive material having certain corrosion resistance and conductivity, which is provided over the surface of the metallic substrate. For example, in a separator disclosed in PTL 1, a carbon film, which is to cover the surface of the separator, is deposited at high temperature by a chemical vapor deposition (CVD) process or a sputtering process so as to have an amorphous phase, thereby the carbon film has high conductivity and thus a separator having low contact resistance is yielded. Furthermore, in a separator disclosed in PTL 2, an oxide film on a metallic substrate is not removed for improving corrosion resistance. In addition, an intermediate layer is provided to add certain adhesion between the oxide film and the conductive thin film that includes carbon and covers the substrate surface, the intermediate layer including a metal element selected from elements such as Ti, Zr, Hf, Nb, Ta, and Cr or a metalloid element such as Si. Furthermore, a mixing ratio of such an element to carbon is changed from 1:0 to 0:1 from the intermediate layer to the conductive thin film across an interface therebetween. In a separator disclosed in PTL 3, an arc ion plating (AIP) system is used to form a diamond-like carbon layer on a surface of a metallic substrate to add corrosion resistance to the metallic substrate, and form a conductive section including graphite particles dispersedly applied onto the diamond-like carbon layer.

Each of separators disclosed in PTL4 and PTL5 includes a substrate composed of stainless steel having particularly high acid resistance, i.e., austenite stainless steel to which Cr and Ni are added or austenite/ferrite duplex stainless steel. In addition, carbon particles are dispersedly applied onto the surface of the substrate in a tight adhesion manner through compression bonding (PTL4) or heat treatment (PTL5).

### Citation List

### Patent Literature

PTL1: Japanese Unexamined Patent Application Publication No. 2007-207718.
PTL2: Japanese Patent No. 4147925.
PTL3: Japanese Unexamined Patent Application Publication No. 2008-204876.
PTL4: Japanese Patent No. 3904690.
PTL5: Japanese Patent No. 3904696.

### Summary of the Invention

### Problems that the Invention is to Solve

The separator described in PTL1, however, includes the metallic substrate covered with only the amorphous carbon film, and is therefore insufficient in environmental shielding performance (barrier performance) and insufficient in adhesion between the carbon film and the metallic substrate. The separator described in PTL2 also has an amorphous carbon film since both the intermediate layer and the carbon film are formed by a sputtering process. In addition, a film of a high-melting-point metal such as Ta, Zr, and Nb generally has pinholes if the film is deposited by a typical sputtering process. Hence, the separator is insufficient in barrier performance for the metallic substrate. Moreover, for example, if each of the carbon films in PTL1 to PTL3 is deposited by a sputtering process using a carbon target, deposition rate is low and thus production cost increases. In each of the separators disclosed in PTL4 and PTL5, since the carbon particles adhere on the substrate in islands, the substrate is partially exposed. Hence, even if the substrate is composed of the stainless steel having high acid resistance, iron ions may be eluted during use in a fuel cell.

An object of the invention, which is made in light of the above-described problems, is to provide a fuel cell separator including a highly producible carbon film that allows the separator to be used in a fuel cell with low contact resistance maintained over a long duration.

### Means for Solving the Problems

The inventors have produced a fuel cell separator, in which titanium or titanium alloy, which is light and excellent in corrosion resistance, is used as a substrate material, and a conductive carbon layer is prepared through film formation by compression bonding of carbon powders, so that the surface of the substrate is highly productively covered with the conductive carbon layer having a sufficient thickness. Furthermore, the inventors have found that an intermediate layer containing a reaction product of titanium (Ti) in the substrate and carbon (C) in the carbon layer is provided at an interface between the substrate and the carbon layer, so that good adhesion between the carbon layer and the substrate and good barrier performance for the substrate are achieved.

Specifically, a fuel cell separator according to the present invention, which includes a substrate including titanium or titanium alloy and a conductive carbon layer covering a surface of the substrate, is characterized in that an intermediate layer including titanium carbide and carbon dissolved titanium is provided between the substrate and the carbon layer. The intermediate layer includes a layer having a mixed structure including the titanium carbide having a granular morphology and the carbon dissolved titanium having a granular morphology, the titanium carbide and the carbon dissolved titanium being continued along an in-plane direction while being overlapped with each other. Furthermore, the fuel cell separator preferably includes the carbon layer configured of a graphite layer.

In this way, the substrate is formed of titanium, thereby even if the surface of the substrate is uncovered and exposed to the inside acidic atmosphere of the fuel cell, the substrate is not corroded, i.e., exhibits excellent durability. In addition, metal ions are not eluted from the substrate, and consequently degradation of the fuel cell is prevented. Furthermore, the fuel cell separator is light and can be reduced in thickness, thus allowing the fuel cell to be relatively easily reduced in weight and in size. In addition, the carbon layer is provided as the conductive film on the surface, thereby the fuel cell separator has high conductivity that is maintained over a long duration. Furthermore, the intermediate layer is provided between the substrate and the carbon layer, the intermediate layer including the titanium carbide and the carbon dissolved titanium produced as a result of a reaction of titanium in the substrate and carbon in the carbon layer. This gives good adhesion between the carbon layer and the substrate and barrier performance for the substrate. In addition, the carbon layer covers the substrate with the intermediate layer including a low-resistance material therebetween; hence, the carbon layer is electrically connected to the substrate with low resistance, leading to a fuel cell separator having further improved conductivity.

In the fuel cell separator according to the invention, the carbon layer is prepared by compression bonding of powdery or granular carbon to the substrate. Such a carbon layer is readily formed into a film having a sufficient thickness.

### Advantage of the Invention

According to the fuel cell separator of the present invention, a carbon film, which is prepared at low cost, secures low contact resistance that is maintained over a long duration.

### Brief Description of the Drawings

Fig. 1 is a schematic, enlarged cross-sectional view for explaining a laminated structure of a fuel cell separator according to the present invention.
Fig. 2 shows a photograph of a transmission electron microscope image of a cross-section of a specimen of a fuel cell separator according to an Example.
Fig. 3 shows photographs of electron diffraction images of the specimen of the fuel cell separator according to the Example, where (a) shows electron diffraction at a point P1 in Fig. 2, and (b) shows electron diffraction at a point P2 in Fig. 2.
Fig. 4 shows a photograph of a transmission electron microscope image of a cross-section of a specimen of a fuel cell separator according to an Example.
Fig. 5 includes photographs of electron diffraction images of the specimen of the fuel cell separator according to the Example, where (a) to (i) show electron diffraction at points P4 to P12 in Fig. 4.
Fig. 6 is a schematic view for explaining a method of measuring contact resistance.

### Mode for Carrying Out the Invention

### [Fuel Cell Separator]

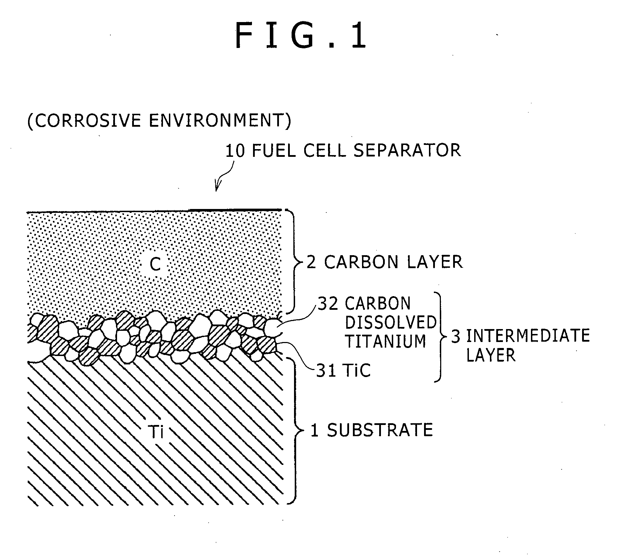

A fuel cell separator according to the present invention is described in detail with reference to Fig. 1.
The fuel cell separator 10 according to the present invention is a plate-like separator for use in a typical fuel cell (polymer electrolyte fuel cell), and has grooves as flow channels for gas such as hydrogen or oxygen (not shown). As shown in Fig. 1, the fuel cell separator 10 is configured of a substrate 1 including titanium (pure titanium) or titanium alloy, a carbon layer 2 provided as a surface layer of the fuel cell separator 10, and an intermediate layer 3 provided between the substrate 1 and the carbon layer 2. The surface of the fuel cell separator 10 refers to regions exposed to the inside acidic atmosphere of a fuel cell (including two sides and end faces) during use in a fuel cell. Various elements configuring the fuel cell separator are now described in detail.

### (Substrate)

The substrate 1 is prepared through forming of a plate material into a shape of the fuel cell separator 10 to meet the substrate of the fuel cell separator 10. The substrate 1 is formed of titanium (pure titanium) or titanium alloy that is particularly preferable for a reduction in thickness and in weight of the fuel cell separator 10, and has sufficient acid resistance against the inside acidic atmosphere of the fuel cell during use in the fuel cell. For example, pure titanium defined by JIS H 4600 Class 1 to Class 4 or Ti alloys such as Ti-Al, Ti-Ta, Ti-6Al-4V, and Ti-Pd can be used. In particular, pure titanium is preferred since it is particularly suitable for a reduction in thickness. Specifically, pure titanium, as a preferred material, contains O: 1500 ppm or less (more preferably 1000 ppm or less), Fe: 1500 ppm or less (more preferably 1000 ppm or less), C: 800 ppm or less, N: 300 ppm or less, H: 130 ppm or less, and the remainder consisting of Ti and inevitable impurities. For example, a cold-rolled sheet of JIS Class 1 is preferably used. However, pure titanium or titanium alloy usable in the present invention is not limited thereto, and a material containing other metal elements may be preferably used as long as the material has a composition substantially corresponding to that of the above-described pure titanium or titanium alloy. Hereinafter, titanium and carbon as components or elements are denoted herein as "Ti" and "C", respectively.

The thickness of the substrate 1 is preferably, but not limited to, 0.05 to 1 mm as a thickness of a substrate of a fuel cell separator. The substrate 1, if having a thickness in such a range, contributes to satisfy the demand for a reduction in weight and thickness on the fuel cell separate. In addition, the sheet material is easily formed (rolled) into such thickness while having certain strength and handling performance. Furthermore, such a substrate 1 is relatively easily formed into the shape of the fuel cell separator 10 after formation of the carbon layer 2.

In an exemplary method of manufacturing the substrate 1, the substrate 1 is produced of the above-described titanium or titanium alloy in a form of a sheet (bar) by a known process including steps of casting, hot rolling, cold rolling by which the material is rolled into a desired thickness, and annealing and pickling between the steps as necessary.

Titanium or titanium alloy has a natural oxide film (TiO₂ passive film) in the air; hence, a passive film having a thickness of about 10 nm exists on the surface of the substrate 1 before formation of the carbon layer 2 and others, i.e., on the surface of the cold-rolled titanium sheet. Furthermore, the substrate 1 has a layer as a surface layer (a surface layer of a parent metal (Ti) under the passive film) thereof, the layer containing carbon (C) that is resulted from a rolling oil (lubricating oil) during cold rolling and is dissolved in Ti (not shown). In manufacture of the fuel cell separator 10 according to the present invention, the carbon layer 2 is formed on the substrate 1 without removing the passive film and the surface layer containing carbon of the substrate 1. A thick passive film on the substrate 1 results in degradation in conductivity of the fuel cell separator and in adhesion of the carbon layer 2. However, as described later, heat treatment is performed in low oxygen atmosphere after formation of the carbon layer 2, thereby oxygen (O) is diffused from the passive film into the parent metal of the substrate 1 and the carbon layer 2. Thus, the passive film is gradually thinned and partially disappears, and eventually entirely disappears. As a result, the substrate 1 includes only the parent metal, as shown in Fig. 1. This leads to a state where the surface layer containing carbon of the substrate 1 (parent metal) is in contact with the carbon layer 2 while the heat treatment is still continued. Consequently the intermediate layer 3 is produced.

### (Carbon Layer)

The carbon layer 2 is provided as a surface layer of the fuel cell separator 10 while covering the substrate 1, and adds conductivity to the fuel cell separator 10 even under corrosive environment. The carbon layer 2 may have any structure without limitation as long as it is composed of carbon (C) having corrosion resistance and is conductive. That is, the carbon layer 2 may have a hexagonal graphite structure, or may have an amorphous structure mixedly including a small graphite structure and a cubic diamond structure as with charcoal. In particular, the carbon layer 2 preferably has the graphite structure that particularly improves durability of the carbon layer 2.

In the fuel cell separator 10, the carbon layer 2 most preferably covers the entire surface (including two sides and end faces of the substrate 1) exposed to the inside acidic atmosphere of the fuel cell, but the carbon layer 2 may be provided over 40% or more, and preferably 50% or more, of the entire surface. As described above, in the fuel cell separator 10 according to the present invention, since the substrate 1 has the passive film formed under corrosive environment, the substrate 1 itself has certain corrosion resistance and therefore is not corroded even if exposed. The conductivity of the fuel cell separator 10, however, is improved with an increase in areal ratio of a region covered with the carbon layer 2. Hence, the carbon layer 2 may not be a completely continuous film. The carbon layer 2 can be formed through application (coating), onto the substrate 1, of graphite or carbon powder such as carbon black molded into a granular or powdery shape, and subsequent compression bonding of the graphite or carbon powder, which will be described in detail later in a method of manufacturing the fuel cell separator. According to such a procedure, the carbon layer 2 is highly productively produced with sufficient thickness, and thus achieves certain conductivity similar to that of graphite or carbon black.

The carbon powders for forming the carbon layer 2 each preferably have a powder size or particle size (diameter) in a range of 0.5 to 100 µm. If the particle size is excessively large, the carbon powders are less likely to be applied to the substrate 1. Furthermore, such carbon powders are less likely to be applied to the substrate 1 even after compression bonding onto the substrate 1 by rolling. In contrast, if the particle size is excessively small, the carbon powders are pressed to the substrate 1 with reduced force during compression bonding to the substrate 1 by rolling; hence the carbon powders are less likely to adhere onto the substrate 1.

Although the thickness of the carbon layer 2 is not limited, extremely small thickness thereof results in insufficient conductivity. In addition, such a thin film results in a small amount of, i.e., a small number of, carbon powders per area during formation of the carbon layer 2. As a result, the carbon layer 2 becomes a film having many openings, leading to insufficient barrier performance. This further leads to an increase in small regions exposed to the surface of the substrate 1, which in turn leads to formation of passive films in the small regions. Consequently, conductivity of the fuel cell separator 10 is further degraded. In order to add sufficient conductivity to the fuel cell separator 10, the carbon layer 2 preferably has a thickness of 2 µg/cm² or more in terms of coating mass of carbon, and more preferably 5 µg/cm² or more. On the other hand, even if the carbon layer 2 has a coating mass of carbon of more than 1 mg/cm², the conductivity is not further improved. In addition, it is difficult to form the carbon layer 2 through compression bonding of a large amount of carbon powders. Furthermore, if the carbon layer 2 has an extremely large thickness, the carbon layer 2 is easily separated during heat treatment or other processing described later due to a difference in thermal expansion coefficient from the substrate 1. Consequently, the coating mass of carbon is preferably 1µg/cm² or less. The thickness of the carbon layer 2 and the coating mass of carbon can be controlled by application amount of carbon powders onto the substrate 1 for formation of the carbon layer 2.

In this way, the carbon layer 2 is prepared through compression bonding of carbon powders, thereby soft carbon powders are bonded together into one film. The carbon layer 2 however is provided on the hard substrate 1 by press, and is therefore insufficient in adhesion to the substrate 1 immediately after formation of the carbon layer 2. Moreover, as described above, the passive film exists on the surface of the substrate 1, i.e., at the interface between the substrate 1 and the carbon layer 2; hence, the fuel cell separator 10 as a whole has a high contact resistance. Thus, as described below, the passive film is removed from the region between the substrate 1 and the carbon layer 2, and the intermediate layer 3 is formed therein.

### (Intermediate Layer)

The intermediate layer 3 is composed of titanium carbide (TiC) 31 and carbon dissolved titanium (titanium including solid solution of carbon) 32 produced as a result of a reaction caused by interdiffusion of C and Ti at the interface between the substrate 1 and the carbon layer 2 after formation of the carbon layer 2. In detail, as shown in Fig. 1, the intermediate layer 3 has a mixed structure including the granular titanium carbide 31 and the granular carbon dissolved titanium 32, which are continued along a planar direction while being overlapped with each other between the substrate 1 and the carbon layer 2. Such an intermediate layer 3 is produced by forming the carbon layer 2 on the substrate 1, and then performing heat treatment on the carbon layer 2 in low oxygen atmosphere, which will be described in detail later in the method of manufacturing the fuel cell separator.

Such a fact of existence of the intermediate layer 3 corresponds to a fact that the passive film does not exist on the surface of the substrate 1. If heat treatment is performed while the passive film exists on the surface of the substrate 1, C in the carbon layer 2 preferentially reacts with oxygen (O) in the passive film (TiO₂). As a result, almost no reaction product with Ti is yielded. However, oxygen is gradually dissociated from the passive film through such a reaction and discharged in a form of carbon dioxide (CO₂). Along with this, the passive film is gradually reduced in thickness, and eventually disappears. Then, when the carbon layer 2 is into contact with the parent metal of the substrate 1, in detail, when the carbon layer 2 is into contact with the surface layer containing C of the parent metal, C and Ti interdiffuse across such a contact interface by the heat treatment and react with each other. This results in formation of the intermediate layer 3 including the titanium carbide 31 and the carbon dissolved titanium 32. Hence, a region where the intermediate layer 3 is provided corresponds to a region where the passive film on the substrate 1 disappears by the heat treatment. In such a region, the carbon layer 2 covers the parent metal of the substrate 1 only with the low-resistance intermediate layer 3 therebetween, so that the carbon layer 2 is electrically connected to the substrate 1 with low resistance. As a result, the fuel cell separator 10 is formed as a laminate of the substrate 1, the intermediate layer 3, and the carbon layer 2 with low contact resistance therebetween. Furthermore, formation of the intermediate layer 3 results in strong bonding of the substrate 1 and the carbon layer 2 with the intermediate layer 3 therebetween. As a result, during forming of the fuel cell separator 10 or during use of the fuel cell separator 10 in a fuel cell, the carbon layer 2 is not separated, and no space is formed in a region between the substrate 1 and the carbon layer 2. As a result, the inside acidic atmosphere of the fuel cell does not enter the region, and thus does not come into contact with the surface of the substrate 1. This in turn suppresses an increase in contact resistance caused by formation of a new passive film, leading to improvement in durability.

Although size and a shape of each of the titanium carbide 31 and the carbon dissolved titanium 32 composing the intermediate layer 3 are not defined, particle size thereof tends to range from 5 to 100 nm. Although the intermediate layer 3 is most preferably provided over the entire region (interface) between the substrate 1 and the carbon layer 2, if the intermediate layer 3 is provided over 50% or more of the interface, sufficient adhesion is given between the substrate 1 and the carbon layer 2. While the thickness of the intermediate layer 3 is not limited, it is sufficient that the thickness correspond to one particle of at least one of the titanium carbide 31 and the carbon dissolved titanium 32. The thickness however is preferably 10 nm or more since it secures sufficient adhesion between the substrate 1 and the carbon layer 2. On the other hand, if the thickness of the intermediate layer 3 exceeds 500 nm, adhesion between the substrate 1 and the carbon layer 2 is not further improved. On the contrary, heat treatment time increases and thus productivity is reduced. Hence, the thickness is preferably 500 nm or less, and more preferably 200 nm or less.

### [Method of Manufacturing Fuel Cell Separator]

An exemplary method of manufacturing the fuel cell separator according to the present invention is now described.

### (Substrate Manufacturing Step)

In manufacturing of the substrate 1, as described above, a cold-rolled sheet (bar material) having a desired thickness, which is composed of titanium or titanium alloy, is produced by a known process, and is wound into a coil.

### (Carbon Layer Formation Step)

Carbon powders are applied onto the surface (one side or two sides) of the substrate 1. Although the carbon powders may be applied by any process without limitation, the carbon powders may be directly applied onto the substrate 1. Alternatively, slurry may be applied onto the substrate 1, the slurry including carbon powders that are dispersed in an aqueous solution typically of carboxymethylcellulose or in a coating material containing a resin component. In other procedures, a carbon-powder contained film prepared through kneading of carbon powders and resin is attached to the substrate 1, carbon powders are implanted into the surface of the substrate 1 by shot blast so as to be supported by the substrate 1, or a mixture of carbon powders and resin powders is applied onto the substrate 1 by a cold spray process. In the case of application of the slurry, when a solvent is used, the solvent is preferably dried as by blow before subsequent compression bonding.

The substrate 1 having the carbon powders thereon is cold-rolled for compression bonding of the carbon powders to the substrate 1 (hereinafter referred to as rolling compression bonding) to yield the carbon layer 2. In this operation, the cold rolling can be performed by a roller as in the typical cold rolling for manufacturing the substrate 1. Any lubricating oil, however, may not be applied to a mill roll since the carbon powders exhibit an effect similar to that of a lubricant. The total rolling reduction (change rate of thickness of the substrate 1 after rolling compression bonding to that before rolling compression bonding) in the rolling compression bonding is preferably 0.1% or more. Through such rolling compression bonding, soft carbon powders are deformed and bonded together, so that the film-like carbon layer 2 is formed and applied to the substrate 1. Although the upper limit of the total rolling reduction may be adjusted without limitation such that the substrate 1 after rolling compression bonding has a desired thickness with respect to thickness of the substrate 1 at completion of the substrate manufacturing step, the total rolling reduction is preferably 50% or less since excessively large total rolling reduction causes warp or winding.

### (Heat Treatment Step)

The substrate 1 having the carbon layer 2 is heat-treated in non-oxidizing atmosphere, thereby at least part of the passive film on the substrate 1 is removed to allow the carbon layer 2 to be in contact with the substrate 1 (parent metal). In addition, the titanium carbide 31 and the carbon dissolved titanium 32 are formed at such a contact interface so that the intermediate layer 3 is produced. Specifically, the substrate 1 is preferably heat-treated in a vacuum or in low oxygen atmosphere such as nitrogen (N₂) or Ar atmosphere with oxygen partial pressure of 1.3×10⁻³ Pa or less. If the oxygen partial pressure is not sufficiently low, carbon in the carbon layer 2 is oxidized and dissociated in a form of carbon dioxide (CO₂) during the heat treatment, resulting in a decrease in thickness of the carbon layer 2. The heat treatment temperature is preferably in a range of 300 to 850°C. If the heat treatment temperature is excessively low, the reaction of Ti with C does not proceed at the interface between the substrate 1 and the carbon layer 2; hence, the intermediate layer 3 is not formed. If the heat treatment temperature is further low, the natural oxide film (passive film) on the substrate 1 remains since the reaction with O in the passive film with C in the carbon layer 2 does not proceed. As the temperature is higher, rate of each reaction increases, leading to a reduction in heat treatment time. The heat treatment time is set depending on heat treatment temperature within a range of 0.5 to 60 min. On the other hand, if the heat treatment temperature is excessively high, phase transformation of Ti occurs, and therefore mechanical properties of the substrate 1 may vary.

Through such heat treatment, oxygen diffuses from the passive film on the substrate 1 into the Ti parent metal of the substrate 1 or into the carbon layer 2, and thus the passive film disappears or is sufficiently thinned. This leads to a reaction of Ti with C at the interface between the substrate 1 (parent metal) and the carbon layer 2, resulting in formation of the intermediate layer 3. As a result, the carbon layer 2 covers the parent metal of the substrate 1 with the low-resistance intermediate layer 3 therebetween; hence, the carbon layer 2 is electrically connected to the substrate 1 with low resistance, resulting in a decrease in contact resistance of the fuel cell separator 10. The heat treatment may be performed by any heat treatment furnace such as an electric furnace and a gas furnace as long as heat treatment can be performed thereby at a desired heat treatment temperature within the above-described range and in adjustable atmosphere. Furthermore, a continuous heat treatment furnace enables the substrate 1 having the carbon layer 2 to be heat-treated in a form of a coiled bar. In the case where a batch-type heat treatment furnace is used, heat treatment should be performed after the coiled bar is cut into a receivable length in the furnace, or cut into a predetermined shape to be formed into the fuel cell separator 10.

### (Forming Step)

Furthermore, the substrate 1 having the carbon layer 2 and the intermediate layer 3 is formed into a desired shape as by cutting or pressing to produce the fuel cell separator 10. The forming step may be performed before the heat treatment step. Specifically, even if the intermediate layer 3 is not formed yet, it is sufficient that the carbon layer 2 adheres to the substrate 1 to the extent that the carbon layer 2 is not separated during machining. Alternatively, the carbon powders may be subjected to compression bonding by pressing instead of rolling compression bonding to form the carbon layer 2.

While the fuel cell separator according to the present invention has been described with the mode for carrying out the invention hereinbefore, Examples that demonstrate the effects of the invention are described below in comparison with comparative examples that do not satisfy the requirements of the invention. It will be appreciated that the present invention is not limited to the Examples and the above-described various modes, and various modifications and alterations based on the description thereof are included in the gist of the invention.

### Examples

### [Specimen Preparation]

Pure titanium of JIS Class 1 was used as a substrate material, which had a chemical composition of O: 450 ppm, Fe: 250 ppm, N: 40 ppm, C: 350 ppm, and the remainder consisting of Ti and inevitable impurities. The pure titanium was subjected to known steps including melting, casting, hot rolling, and cold rolling so as to be formed into a substrate having thickness of 0.12 mm.

Graphite particles, having an average particle size of 10 µm and a purity of four nines, were dispersed to a predetermined concentration in an aqueous 1 mass% carboxymethylcellulose solution to produce slurry. Then, the slurry was applied to two sides of the titanium substrate without removing the surface layer as by pickling after cold rolling while the application amount was varied for each specimen (substrate), and was then subjected to natural drying. A roll-to-roll gap was adjusted for the substrate to allow a rolling reduction per one pass to be constant, and the substrate was subjected to multiple-pass cold rolling to the total rolling reduction shown in Table 1 with reduction rolls coated with no lubricating oil. As a result, a carbon layer was formed.

The substrate having the carbon layer was accommodated in a spare room of a vacuum heat treatment furnace, and the spare room and the inside of the furnace were evacuated to a vacuum of 3×10⁻³ Pa or less. Then, the inside of the furnace was heated to certain temperature as shown in Table 1, and then the substrate was conveyed into the furnace and was subjected to heat treatment for certain time as shown in Table 1. After the heat treatment, the substrate was conveyed back to the spare room, and then Ar was introduced into the spare room to cool the substrate to 100°C or less, and thus the substrate was prepared as a specimen of the fuel cell separator.

### (Measurement of Coating Mass of Carbon)

The coating mass of carbon was measured using a substrate having the carbon layer (before heat treatment) in place of the specimen. A small piece having a predetermined size was cut out from the substrate having the carbon layer, and the mass of the small piece was measured. Then, the small piece was subjected to ultrasonic cleaning with pure water to remove the carbon layer therefrom. Then, the small piece was dried, and then the mass thereof was measured again to determine a difference in mass. Such a determined difference in mass was defined as the coating mass of carbon on the small piece. Furthermore, the coating mass of carbon per area was calculated. Table 1 shows the resultant coating mass of carbon. It is empirically known that in the case where heat treatment is performed under non-oxidizing atmosphere as in this exemplary case, the coating mass of carbon does not vary between before and after the heat treatment. Hence, in this exemplary case, the coating mass of carbon on the substrate was measured before the heat treatment, and the resultant coating mass was defined as the coating mass of carbon on the substrate (specimen) after the heat treatment.

### (Structural Observation of Region between Substrate and Carbon Layer)

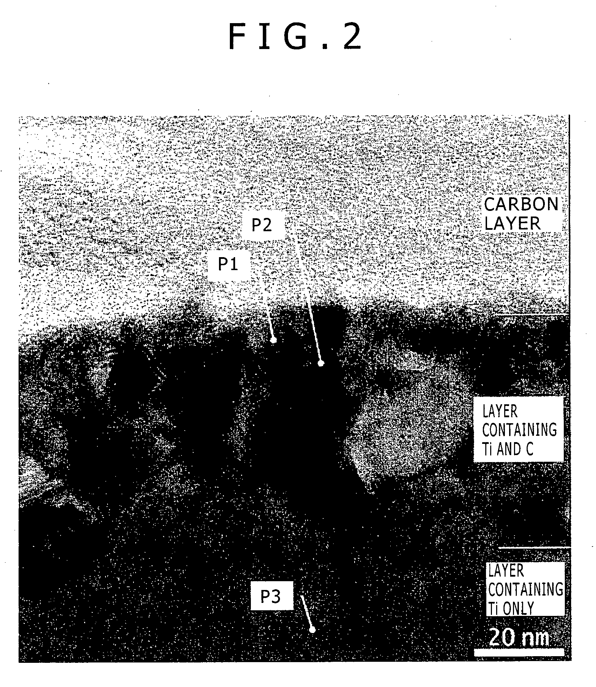

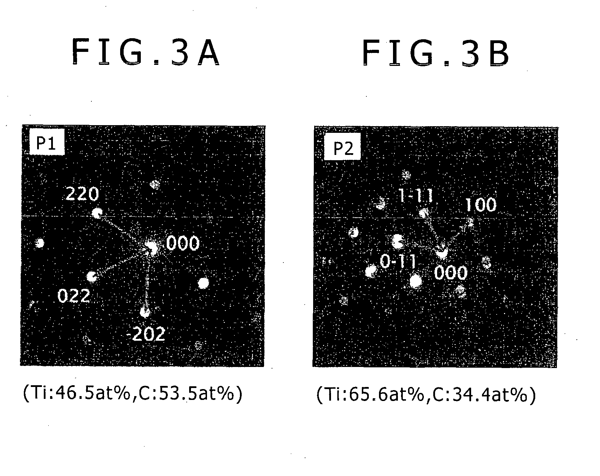

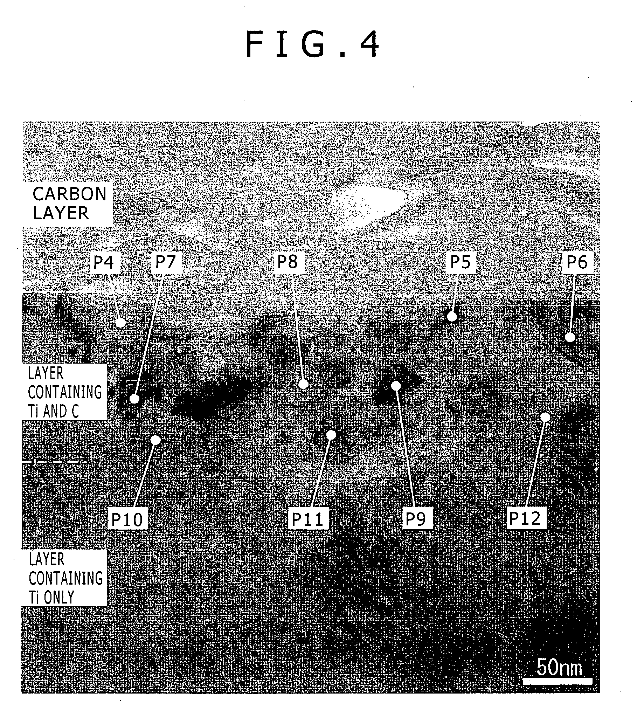

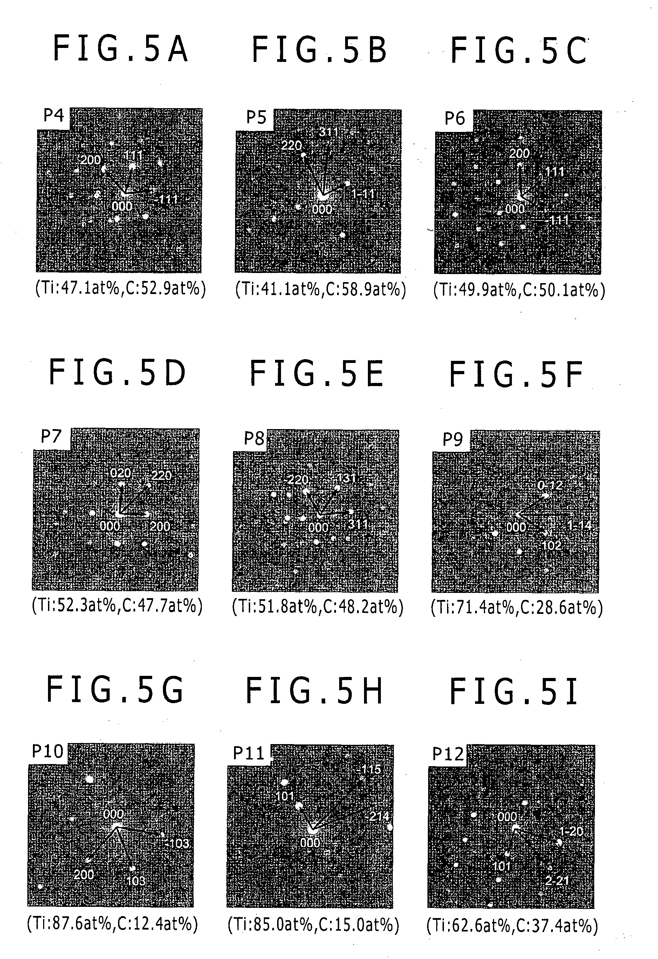

The specimen of the fuel cell separator was cut out, and a cross-section of the specimen was appropriately processed by an ion beam processing apparatus (Hitachi focused ion beam processing observation apparatus, FB-2100). Then, the neighborhood of the interface between the substrate and the carbon layer was subjected to energy dispersive X-ray spectrometry (EDX) while being observed at a magnification of 750,000 by a transmission electron microscope (TEM) (Hitachi field-emission analytical electron microscope, HF-2200). Furthermore, a crystal structure was analyzed on a portion containing titanium (Ti) and carbon (C) by electron diffraction. In a cross-section of the specimen, assuming that a region including only titanium was the substrate, and a region including only carbon was the carbon layer, substances were detected between the regions. The substances are shown in Table 1. Fig. 2 shows a photograph of a TEM image of a specimen No. 1. Furthermore, (a) and (b) of Fig. 3 show photographs of electron diffraction images with coordinates of nuclei together with atomic composition ratios at points P1 and P2, respectively, in Fig. 2. Similarly, Fig. 4 shows a photograph of a TEM image of a specimen No. 6, and (a) to (i) of Fig. 5 show photographs of electron diffraction images and atomic composition ratios at points P4 to P12, respectively, in Fig. 4.

### [Evaluation]

### (Evaluation of Contact Resistance)

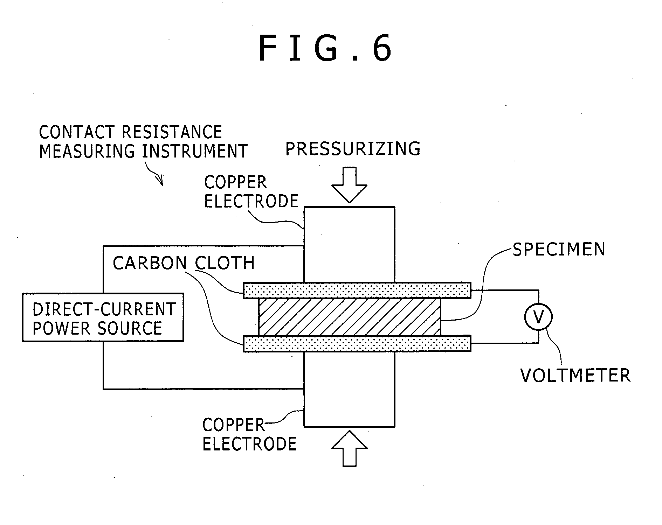

Contact resistance of each specimen was measured using a contact resistance measuring instrument shown in Fig. 6. The specimen was sandwiched between two carbon cloths, the outer sides of which were further sandwiched between two copper electrodes each having a contact area of 1 cm², and the specimen was pressurized from two sides with a load of 98 N (10 kgf). A current of 7.4 mA was then applied through the copper electrodes using a direct-current power source, and a voltage applied between the two carbon cloths was measured with a voltmeter to determine a resistance value. Table 1 shows the resultant resistance values as values of initial-property contact resistance. A contact resistance of 10 mΩ·cm² or less was determined to be the acceptance criterion for conductivity.

### (Durability Evaluation)

Each specimen was subjected to an anticorrosion test. The specimen was first immersed in an aqueous sulfuric acid solution (10 mmol/L) having a solution volume to specimen area ratio of 20 ml/cm² at 80°C. Electric potential of +0.60 V was then applied to the specimen for 200 hours with a saturated calomel electrode (SCE) as a standard electrode. After the anticorrosion test, the specimen was washed and dried, and contact resistance thereof was measured by the same procedure as that for the specimen before immersion. Table 1 shows the resultant contact resistance values. A contact resistance of 30 mΩ·cm² or less after the anticorrosion test was determined to be the acceptance criterion for durability.

### (Adhesion Evaluation)

Adhesion of the carbon layer was evaluated using the contact resistance measuring instrument (see Fig. 6) used for measurement of contact resistance. As with the above-described measurement of contact resistance, a specimen was sandwiched between two carbon cloths, the outer sides of which were further sandwiched between two copper electrodes each having a contact area of 1 cm², and the specimen was pressurized from two sides with a load of 98 N (10 kgf). While being pressurized from two sides, the specimen was pulled out in an in-plane direction (pull-out test). After the pull-out test, a sliding region of each copper electrode on the surface of the specimen was visually observed, and the adhesion was evaluated with a remaining state of the carbon layer, i.e., an exposure level of the substrate. An aerial ratio of the exposed substrate of less than 50% was determined as the acceptance criterion for adhesion. In Table 1, a specimen having no exposure of the substrate is shown to be excellent (○), a specimen having an exposure level of the substrate of less than 50% is shown to be good (Δ), and a specimen having an exposure level of the substrate of 50% or more is shown to be bad (×).

**Table 1**

| Test piece | | Total rolling reduction in rolling compression bonding (%) | Coating mass of carbon (µg/cm²) | Heat treatment condition | Substance between substrate and carbon layer | Adhesion of carbon layer | Contact resistance (mΩ·cm²) | |
|---|---|---|---|---|---|---|---|---|
| Category | No. | | | | | | Initial | After test |
| Example | 1 | 1.0 | 350 | 700°C×3min | TiC, Carbon dissolved titanium | ○ | 3.1 | 4.2 |
| | 2 | 0.8 | 310 | 600°C×3min | TiC, Carbon dissolved titanium | ○ | 3.4 | 6.7 |
| | 3 | 2.5 | 390 | 650°C×5min | TiC, Carbon dissolved titanium | ○ | 3.8 | 5.8 |
| | 4 | 4.6 | 430 | 710°C×2min | TiC, Carbon dissolved titanium | ○ | 3.0 | 4.1 |
| | 5 | 3.2 | 53 | 410°C×10min | TiC, Carbon dissolved titanium | ○ | 4.3 | 6.4 |
| | 6 | 1.6 | 385 | 750°C×5min | TiC, Carbon dissolved titanium | ○ | 3.2 | 4.5 |
| Comparative example | 7 | 1.0 | 98 | Not performed | Ti oxide film | x | 9.4 | 87 |
| | 8 | 1.0 | 140 | 150°C×20min | Ti oxide film | x | 8.6 | 56 |
| | 9 | 1.0 | 23 | 200°C×10min | Ti oxide film | x | 6.4 | 64 |

As shown in Table 1, a sufficient amount of carbon adhered on the substrate in each specimen. This revealed film formation by carbon powders (graphite particles) on the substrate through rolling. Furthermore, in each of the specimens Nos. 1 to 6, a layer was observed under the carbon layer (containing only C), the layer including gathered granular substances containing Ti and C. For example, as shown in Fig. 2, the specimen No. 1 had a layer having a thickness of about 50 nm. A layer containing only Ti (Ti: 100 at% at a point P3 in Fig. 2) existed under the layer containing Ti and C, and no oxygen (O) was detected in the layer.

From atomic composition ratios and crystal structures (see Fig. 3), it was confirmed that the granular substances in the layer containing Ti and C of the specimen No. 1 were two products, i.e., titanium carbide (Ti: 46. 5 at% and C: 53.5 at%) and carbon dissolved titanium (Ti: 65. 6 at% and C: 34.4 at%), the values being measured at the points P1 and P2 in the specimen No. 1. As shown in Fig. 4, the specimen No. 6, which was heat-treated at high temperature and for long time compared with the specimen No. 1, had a layer having a thickness of about 100 nm and containing Ti and C. From atomic composition ratios and crystal structures at points P4 to P12 in Fig. 4 (see Fig. 5), it was confirmed that the layer had a mixed structure including granular titanium carbide (at points P4 to P8 in Fig. 4) and granular carbon dissolved titanium (at points P9 to P11 in Fig. 4). Such results showed that the specimens No.1 to 6 were Examples of the fuel cell separator according to the present invention, in which the passive film (TiO₂) on the substrate disappeared, and the intermediate layer including two products of granular titanium carbide and granular carbon dissolved titanium was provided between the substrate and the carbon layer.

In this way, the specimens No.1 to 6 each had good initial contact resistance since the passive film on the substrate was removed. Furthermore, the specimens No.1 to 6 each had the intermediate layer, and thus had excellent adhesion between the substrate and the carbon layer. In addition, the specimens each showed no exposure of the substrate in the sliding region after the pull-out test (areal ratio of exposed substrate: 0%). In addition, the specimens No.1 to 6 each showed an extremely small increase in contact resistance after the corrosion test, i.e., had excellent durability. Consequently, it was estimated that almost no passive film was formed on the surface of the substrate in the corrosion test, revealing that formation of the intermediate layer prevented entering of a corrosive environment material (aqueous sulfuric acid solution) into the region between the substrate and the carbon layer.

In contrast, in each of the specimens Nos.7 to 9, a film-like titanium oxide was detected between the carbon layer and the layer containing only Ti, revealing that the passive film existed on the surface of the substrate. In addition, the specimens No.7 to 9 each had no region in which both Ti and C were detected, i.e., had no intermediate layer. In particular, in the specimen No.7, since the heat treatment was not performed after formation of the carbon layer, a thick passive film (natural oxide film) existed on the substrate at the interface with the carbon layer; hence, initial contact resistance was bad compared with the Examples (specimens Nos. 1 to 6) though satisfying the acceptance criterion. In each of the specimens Nos. 8 and 9, temperature of the heat treatment was low, and thus the passive film was somewhat thinned due to a certain reaction with carbon, thereby initial contact resistance was improved compared with the specimen No.7. In any of the specimens Nos. 7 to 9, however, the intermediate layer was not provided, and therefore adhesion between the substrate and the carbon layer was bad, and the substrate was exposed over 50% or more of area of the sliding region after the pull-out test. In addition, each of the specimens Nos. 7 to 9 had bad durability, and the contact resistance thereof extremely increased after the corrosion test. The reason for this is as follows. A space was formed at the interface between the substrate and the carbon layer. Then, during the corrosion test, the aqueous sulfuric acid solution entered the space as from an end face of the specimen and came into contact with the surface (passive film) of the substrate over a wide region of the surface, resulting in growth of the passive film.

Although the present invention has been described in detail with reference to the specific embodiments and Examples thereof, it is obvious to those skilled in the art that various alterations and modifications can be made in the invention without departing from the spirit and scope of the invention.
The present application is based on Japanese Patent Application No. 2011-028423 filed on February 14, 2011 and Japanese Patent Application No. 2012-009653 filed on January 20, 2012, the entire contents of which are incorporated herein by reference.

### Industrial Applicability

The fuel cell separator of the present invention is usable for various fuel cells, in particular, polymer electrolyte fuel cells for use in fuel cell vehicles, domestic use cogeneration systems, and mobile devices such as mobile phones and personal computers.

### Description of the Reference Numerals and Signs

10 fuel cell separator
1 substrate
2 carbon layer
3 intermediate layer
31 titanium carbide
32 carbon dissolved titanium

## Claims

1. A fuel cell separator including a substrate including titanium or titanium alloy and a conductive carbon layer covering a surface of the substrate, wherein
an intermediate layer including titanium carbide and carbon dissolved titanium is provided between the substrate and the carbon layer.

2. The fuel cell separator according to claim 1, wherein
the intermediate layer has a mixed structure including the titanium carbide having a granular morphology and the carbon dissolved titanium having a granular morphology, the titanium carbide and the carbon dissolved titanium being continued along an in-plane direction while being overlapped with each other.

3. The fuel cell separator according to claim 1 or 2, wherein the carbon layer is configured of a graphite layer.

4. The fuel cell separator according to any one of claims 1 to 3, wherein the carbon layer is prepared by compression bonding of powdery or granular carbon to the substrate.
